# EUROPÄISCHE PATENTSCHRIFT

(11) **EP 0 837 092 B1**
(45) Veröffentlichungstag und Bekanntmachung des Hinweises auf die Patenterteilung: **13.08.2003**
(21) Anmeldenummer: 97117562.5
(22) Anmeldetag: 10.10.1997
(51) Int. Cl.: C08J 11/24, C08G 18/50, C08G 18/83, C08G 18/79

(54) **Verfahren zur Herstellung von Polyisocyanuratschaumstoffen mit verminderter Wärmeleitfähigkeit**
Process for the preparation of polyisocyanurate foams having reduced thermal conductivity
Procédé de préparation de mousses de polyisocyanurate ayant une conductivité thermique réduite

(30) Priorität: 18.10.1996 DE 19643057
(43) Veröffentlichungstag der Anmeldung: 22.04.1998
(73) Patentinhaber: BASF AKTIENGESELLSCHAFT, 67056 Ludwigshafen (DE)
(72) Erfinder: Naber, Bernhard, 09187 Schwarzheide (DE); Calgua, Erwin, 67480 Edenkoben (DE); Gassan, Michael, 09168 Senftenberg (DE); Neiss, Vera, 01987 Schwarzheide (DE)

(56) Entgegenhaltungen:
- EP-A- 0 592 952
- DE-A- 2 759 054
- US-A- 3 983 087

## Beschreibung

Die Erfindung betrifft ein Verfahren zur Herstellung von Polyisocyanuratschaumstoffen mit verminderter Wärmeleitfähigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Katalysatoren,
e) gegebenenfalls Treibmitteln
f) sowie gegebenenfalls weiteren Hilfsmitteln und/oder Zusatzstoffen.

Die Erfindung betrifft weiterhin die nach diesem Verfahren hergestellten Polyisocyanuratschaumstoffe sowie deren Verwendung als Wärmedämmstoffe.

Polyisocyanurate (PIR) werden als zellige und zellfreie Schaumstoffe nach dem Polyadditionsverfahren hergestellt, indem ein Gemisch von Isocyanaten, insbesondere auf Basis von polymerem Diphenylmethandiisocyanat, und Polyolen bei großem Isocyanatüberschuß im Beisein von Trimerisierungskatalysatoren umgesetzt wird. Eine zusammenfassende Übersicht über das Verfahren wird z.B. im Kunststoff-Handbuch, Band VII, "Polyurethane", 1. Auflage 1966, herausgegeben von Dr. R. Vieweg und Dr. A. Höchtlen, und 3. Auflage 1993, herausgegeben von Becker/Braun (Carl Hanser Verlag, München) gegeben.

In der Patent- und Fachliteratur werden Verfahren zum chemischen Recycling von PIR im Verhältnis zu Polyurethanen (PUR) und PUR/Polyharnstoffen eher selten erwähnt. In einigen Fällen wird PIR neben PUR genannt, jedoch in den Beispielen nicht konkret beschrieben. So werden in DE-A-29 02 509 Katalysatoren auf Titanund Zirkoniumbasis für die Glykolyse von PUR und PIR geschützt, Ausführungsbeispiele aber nur für PUR erwähnt. In US-A-3 708 440 wird ein Verfahren zur Glykolyse von PIR-Schaumstoffen beschrieben. Arbeitet man dieses Patent nach, erhält man nicht das erwartete homogene Glykolysat, sondern eine Lösung mit hohem Feststoffanteil, wodurch eine weitere Verarbeitung erschwert bzw. unmöglich gemacht wird.

DE-A-2 759 054 betrifft die Herstellung von Recyclatpoly olen aus PU-Abfällen, die auch PU-PIR Abfälle umfassen Können, durch Glykolyse und deren Verwendung von PU-, PIR- oder Polycarbodiimid-Schaumstoffen.

Nach unserer älteren Patentanmeldung Nr. 195 25 301.9 führt die Glykolyse von PIR-Schaumstoffen zu Flüssigprodukten ohne nennenswerten Gehalt an Feststoffen , wenn ein sogenanntes Trägerpolyol während der Reaktionszeit im Reaktionsgemisch vorliegt.

Eine Verbesserung der Qualität der PIR- bzw. PUR-Schaumstoffe durch den Einsatz von Recyclatpolyolen wurde bisher nicht beschrieben.

Ziel der PIR-Herstellung ist die Ausbildung besonderer Eigenschaften, wie z. B. hohe Härte, Flammwidrigkeit oder niedrige Wärmeleitfähigkeit, wobei es relativ schwierig ist, die entsprechenden Wünsche der Anwender zu erfüllen.

Der vorliegenden Erfindung lag deshalb die Aufgabe zugrunde, ein einfaches und kostengünstiges Verfahren zur Herstellung von PIR-Schaumstoffen mit verminderter Wärmeleitfähigkeit zu entwickeln.

Überraschenderweise wurde gefunden, daß diese Aufgabe dadurch gelöst werden kann, daß bei der Herstellung der PIR-Schaumstoffe ein Recyclatpolyol, welches durch Glykolyse von PIR-Schaumstoffen unter Verwendung eines Trägerpolyols entsteht, eingesetzt wird.

Gegenstand der Erfindung ist demzufolge ein Verfahren zur Herstellung von PIR-Schaumstoffen mit verminderter Wärmeleitfähigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Katalysatoren,
e) gegebenenfalls Treibmitteln
f) sowie gegebenenfalls weiteren Hilfsmitteln und/oder Zusatzstoffen,
das dadurch gekennzeichnet ist, daß als Komponente b) mindestens ein Recyclatpolyol, welches durch Glykolyse von PIR-Schaumstoffen unter Verwendung von Trägerpolyolen mit einer OH-Zahl von höchstens 500 mg KOH/g und einer Molmasse von mindestens 450 g/mol entsteht, eingesetzt wird.

Gegenstände der Erfindung sind weiterhin die nach diesem Verfahren hergestellten PIR-Schaumstoffe sowie deren Verwendung als Wärmedämmstoff.

Es war überraschend und in keiner Weise vorhersehbar, daß bei Einsatz von aus PIR-Schaumstoffen durch Glykolyse hergestellten Recyclatpolyolen wieder hochwertige PIR-Schaumstoffe hergestellt werden können, die noch dazu eine verminderte Wärmeleitfähigkeit aufweisen. Es wäre vielmehr zu erwarten gewesen, daß sich durch den Einsatz von Recyclatpolyolen die mechanischen Eigenschaften des PIR-Schaumstoffes verschlechtern.

Es wurde somit ein wirtschaftliches Verfahren zur Herstellung von PIR-Schaumstoffen, die sich hervorragend als Wärmedämmstoffe eignen, gefunden.

Als höhermolekulare Verbindungen mit mindestens zwei reaktiven Wasserstoffatomen werden erfindungsgemäß ganz oder teilweise Recyclatpolyole allein oder im Gemisch miteinander eingesetzt. Vorteilhafterweise werden zur Erzielung einer möglichst geringen Wärmeleitfähigkeit Recyclatpolyole in einem Anteil von mindestens 15 Gew.-%, bezogen auf die Gesamtmenge der Komponente b), verwendet. Aus wirtschaftlichen Gründen kann der Einsatz der Recyclatpolyole wesentlich über 15 Gew.-% liegen bzw. die Komponente b) vollständig aus Recyclatpolyol bestehen. Natürlich können auch weniger als 15 Gew.-% Recyclatpolyole verwendet werden.

Es war überraschend, daß bei Einsatz von erfindungsgemäßen Recyclatpolyolen bei der Herstellung der PIR-Schaumstoffe ohne zusätzliche Verwendung spezieller Zusatzmittel die Wärmeleitfähigkeit signifikant und reproduzierbar gesenkt werden kann.

Die erfindungsgemäß einzusetzenden Recyclatpolyole werden durch Glykolyse von PIR-Schaumstoffen unter Verwendung von Trägerpolyolen mit einer OH-Zahl von höchstens 500 mg KOH/g und einer Molmasse von mindestens 450 g/mol hergestellt, wie es in unserer älteren Patentanmeldung Nr. 195 25 301.9 beschrieben ist.

Dazu wird das PIR, zumeist in zerkleinerter Form, mit einem Gemisch aus eingesetzten kurzkettigen, Hydroxylgruppen enthaltenden Verbindungen und Trägerpolyol zur Reaktion gebracht.

Nach einer besonders vorteilhaften Ausführungsform wird das Verfahren so durchgeführt, daß das Gemisch aus eingesetzten kurzkettigen, Hydroxylgruppen enthaltenden Verbindungen und Trägerpolyol vor Zugabe des PIR auf Temperaturen von 190 bis 240°C, vorzugsweise 210 bis 230°C, aufgeheizt und nach Zugabe des PIR die Temperatur um 10 bis 40°C gesenkt wird. Bei dieser Temperatur wird die Reaktion über 1,5 bis 3 h, vorzugsweise 2 bis 2,5 h, unter ständigem Rühren durchgeführt. Nach Abschluß der Reaktion wird das Reaktionsgemisch auf 50 bis 150°C, vorzugsweise 80 bis 130°C, abgekühlt und ihm ein Hydroxid eines Alkali- oder Erdalkalimetalles, vorzugsweise Natriumhydroxid oder Kaliumhydroxid, in einer Menge von höchstens 5 Gew.-%, bezogen auf den Gesamtansatz, zugesetzt. Bei dieser Temperatur wird 0,5 bis 1,5 h gerührt.

Nach einer weiteren vorteilhaften Ausführungsform wird das Reaktionsgemisch nach Abschluß der Reaktion auf 100 bis 160°C abgekühlt und ihm ein Glycidether in einer Menge von höchstens 10 Gew.-%, bezogen auf den Gesamtansatz, zugesetzt und bei dieser Temperatur 0,5 bis 1,5 h gerührt.

Vorzugsweise kommen dabei als Glycidether monofunktionelle Glycidether, besonders bevorzugt der 2-Ethylhexylglycidether, zur Anwendung.

Gegebenenfalls kann sich daran noch eine Aufarbeitung des Recyclatpolyols anschließen, beispielsweise durch Filtration.

Das Verhältnis der eingesetzten kurzkettigen, Hydroxylgruppen enthaltenden Verbindungen zum Trägerpolyol beträgt dabei im allgemeinen (5 bis 20) zu 1, das Verhältnis des Gemisches aus eingesetzten kurzkettigen, Hydroxylgruppen enthaltenden Verbindungen und Trägerpolyol zum PIR (1 bis 5) zu 1.

Zur Umsetzung von PIR mit kurzkettigen, Hydroxylgruppen enthaltenden Verbindungen werden erfindungsgemäß Trägerpolyole mit einer OH-Zahl von höchstens 500 mg KOH/g und einer Molmasse von mindestens 450 g/mol eingesetzt. Geeignete Trägerpolyole sind beispielsweise Polyole, die durch Anlagerung von Propylenoxid an dreifunktionelle Alkohole hergestellt werden. Vorzugsweise verwendet man Polyole auf Basis von Glycerin und/oder Trimethylolpropan.

Als kurzkettige, Hydroxylgruppen enthaltende Verbindungen können prinzipiell alle zwei- oder höherfunktionellen Alkohole verwendet werden.

Besonders vorteilhaft für das erfindungsgemäße Verfahren sind zweifunktionelle Alkohole. Die Alkohole können einzeln oder als Gemisch eingesetzt werden.

Bevorzugt eingesetzt werden Ethylenglykol und seine höheren Homologen, insbesondere Diethylenglykol und Propylenglykol und seine höheren Homologen, insbesondere Dipropylenglykol, einzeln oder im Gemisch untereinander.

Das Verfahren kann in Anwesenheit üblicher Polyurethankatalysatoren durchgeführt werden. Vorzugsweise werden hierfür Zinn- und Titan-organische Verbindungen eingesetzt.

Als PIR können Abfälle verwendet werden, beispielsweise aus der Produktion von PIR-Blockschäumen, PIR-Formteilen oder auch Sandwichelementen.

Zur Herstellung der PIR-Schaumstoffe nach dem erfindungsgemäßen Verfahren finden, neben den oben beschriebenen Recyclatpolyolen, die an sich bekannten Aufbaukomponenten Verwendung, zu denen im einzelnen folgendes auszuführen ist:
a) Als organische und/oder modifizierte organische Polyisocyanate (a) kommen die an sich bekannten aliphatischen, cycloaliphatischen, araliphatischen und vorzugsweise die aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, hergestellt beispielsweise durch Umsetzung mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmiscbungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylenund Polyoxypropylenpolyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich als organische Polyisocyanate aromatische Polyisocyanate und kommen daher vorzugsweise zur Anwendung: Roh-MDI, Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.
b) Als höhermolekulare Verbindungen mit mindestens zwei reaktiven Wasserstoffatomen werden erfindungsgemäß die oben beschrieben Recyclatpolyole eingesetzt. Daneben können weitere höhermolekulare Verbindungen mit mindestens zwei reaktiven Wasserstoffatomen (b) mitverwendet werden. Hierfür kommen zweckmäßigerweise solche mit einer Funktionalität von 2 bis 8, vorzugsweise 2 bis 6, und einem Molekulargewicht von 400 bis 8000, vorzugsweise von 1200 bis 6000 in Betracht. Bewährt haben sich z.B. Polyetherpolyamine und/oder vorzugsweise Polyole ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 150 bis 850 und vorzugsweise 200 bis 600.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlendioxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titanund Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.

Die erhaltenen Polyesterpolyole besitzen vorzugsweise eine Funktionalität von 2 bis 4, insbesondere 2 bis 3, und ein Molekulargewicht von 480 bis 3000, vorzugsweise 1200 bis 3000 und insbesondere 1800 bis 2500.

Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.

Als Polyetherpolyole eignen sich ferner polymermodifizierte Polyetherpolyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US 4 374 209 und DE-A-32 31 497.

Die Polyetherpolyole können ebenso wie die Polyesterpolyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).

Die PIR-Schaumstoffe können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der PIR-Schaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.

Als Katalysatoren (d) zur Herstellung der PIR-Schaumstoffe werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bicyclo-(2,2,2)-octan, und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).

Zu Treibmitteln (e), welche zur Herstellung der PIR-Schaumstoffe gegebenenfalls eingesetzt werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyoxyalkylen-polyole.

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Polyoxyalkylen-polyole. Gegebenenfalls kann es zweckmäßig sein, die gegebenenfalls modifizierten Polyisocyanate (c) mit dem inerten physikalisch wirkenden Treibmittel zu mischen und dadurch die Viskosität zu verringern.

Der Reaktionsmischung zur Herstellung der PIR-Schaumstoffe können gegebenenfalls auch noch in der Polyurethanchemie übliche Hilfsmittel und/oder Zusatzstoffe (f) einverleibt werden. Genannt seien beispielsweise Schaumstabilisatoren, Füllstoffe, Farbstoffe, Pigmente, Flammschutzmittel, Hydrolyseschutzmittel, fungistatische und bakteriostatisch wirkende Substanzen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Geeignete Flammschutzmittel sind beispielsweise Trikresylphosphat,Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsaurediethylester sowie handelsübliche halogenhaltige Flammschutzpolyole.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponente (b) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1., 2. und 3. Auflage, 1966, 1983 und 1993 zu entnehmen.

Zur Herstellung der PIR-Schaumstoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und gegebenenfalls (c) 0,7 bis 1,5:1 beträgt.

Die PIR-Schaumstoffe werden vorteilhafterweise nach dem one shot-Verfahren oder Prepolymerverfahren mit Hilfe der Hochdruck- oder Niederdruck-Technik in offenen oder geschlossenen Formwerkzeugen, beispielsweise metallischen Formwerkzeugen, oder freiverschäumt (Ortschaum) hergestellt. Als besonders vorteilhaft hat es sich erwiesen, nach dem Zweikomponenten-Verfahren zu arbeiten und die Aufbaukomponenten (b), (d) und gegebenenfalls (c), (e) und (f) in der Komponente (A) zu vereinigen und als Komponente (B) die organischen und/oder modifizierten organischen Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und im Falle der Herstellung von Formschaumstoffen in das offene oder in das geschlossene Formwerkzeug eingebracht. Die Formwerkzeugtemperatur beträgt zweckmäßigerweise 20 bis 110°C, vorzugsweise 30 bis 60°C und insbesondere 45 bis 50°C.

Im Falle einer Freiverschäumung werden Blöcke zur nachträglichen mechanischen Bearbeitung, beispielsweise durch Sägen, z.B. zu Platten, erzeugt. Ebenso ist es möglich, die erfindungsgemäßen Polyurethansysteme hinsichtlich ihrer Reaktivität so einzustellen, daß sie nach den bekannten Verfahren des Schaumsprühens (Spritzschaumverfahren) verarbeitet werden können, wobei die Beschichtung von senkrechten, waagerechten und hängenden Flächen (über Kopf) möglich ist.

Die nach dem erfindungsgemäßen Verfahren hergestellten PIR-Schaumstoffe weisen eine Dichte von 25 bis 50 kg/m³, vorzugsweise von 30 bis 40 kg/m³, auf. Sie haben eine gleichmäßig feinzellige Schaumstoffstruktur.

Die erfindungsgemäßen PIR-Schaumstoffe weisen eine Wärmeleitfähigkeit von 17 bis 22, vorzugsweise von 19 bis 21, mW/(m . K) auf.

Die nach dem erfindungsgemäßen Verfahren hergestellten PIR-Schaumstoffe sind für alle für PIR-Schaumstoffe üblichen Anwendungen geeignet. Insbesondere eingesetzt werden sie als Wärmedämmplatten, vorzugsweise im Hoch- und Tiefbau, Wärmeisolierungen in Rohrleitungssystemen sowie zur thermischen Isolierung von Baugruppen, -teilen und -elementen im Apparate- und Maschinenbau.

Die Erfindung wird in den nachfolgenden Ausführungsbeispielen näher erläutert.

### Beispiel 1 (Vergleichsbeispiel):

Die A-Komponente, bestehend aus einer Mischung von:
- 63,46: Gew.-Teilen eines Polyesterols aus Phthalsäureanhydrid, Diethylenglykol und Polyethylenglykol mit der OHZ 240 mg KOH/g,
- 1,87: Gew.-Teilen des Stabilisators BP SR 321 der Fa. Union Carbide,
- 0,56: Gew.-Teilen eines Katalysators I (Kaliumacetat/Ethylenglykol),
- 0,99: Gew.-Teilen eines Katalysators II (Trisdimethylaminopropylhexahydrotriazin/Triethylamin) und
- 33,12: Gew.-Teilen R 141 b,
wurde mit 174 Gew.-Teilen der B-Komponente (Diphenylmethandiisocyanat/Polyisocyanat) umgesetzt.

Es entstand ein PIR-Schaum mit folgenden Kennwerten:

| | |
|---|---|
| Rohdichte [kg/m³] | 33,2 |
| Dimensionsstabilität -5°C, 24 h [%] | 94,2 |
| Druckfestigkeit [kPa] | 346 |
| Wärmeleitfähigkeit [mW/m·K] | 24,4 |
| Flammhöhe [cm] | 9 |

### Beispiel 2 (Herstellung des Recyclatpolyols)

700 g eines PIR-Schaums (NCO-Index 500) wurden bei 215-225°C in ein Gemisch aus 1000 g Diethylenglykol (DEG), 680 g des Polyetherpolyols Lupranol® 3300 der BASF Aktiengesellschaft (1 Mol Glycerin mit 8,5 Mol Propylenoxid) und 0,3 Gew.-% Titantetrabutylat (bezogen auf DEG und PIR-Schaum) so eingetragen, daß der Kolbeninhalt rührfähig blieb. Nach Beendigung der Zugabe wurde die Temperatur auf 190-200°C gesenkt und unter Rühren 2 h beibehalten. Danach wurde auf 150°C abgekühlt und 90 g 2-Ethylhexylglycidether zugegeben und eine weitere Stunde bei dieser Temperatur gerührt. Es wurde eine homogene dunkelbraune Flüssigkeit mit folgenden Kennwerten erhalten:

| | |
|---|---|
| OHZ | 520 mg KOH/g |
| Säurezahl | 0,6 mg KOH/g |
| Viskosität | 3500 mPa.s |
| MDA-Gehalt | < 0,1 % |

### Beispiel 3

Die A-Komponente, bestehend aus einer Mischung von:
- 12,70: Gew.-Teilen eines Recyclatpolyols, hergestellt gemäß Beispiel 2 durch Glykolyse von PIR-Schaumstoffabfällen unter Verwendung von Trägerpolyetherolen mit der OHZ 520 mg KOH/g.
- 50,77: Gew.-Teilen eines Polyesterols aus Phthalsäureanhydrid, Diethylenglykol und Polyethylenglykol mit der OHZ 240 mg KOH/g.
- 1,87: Gew.-Teilen des Stabilisators BP SR 321 der Fa. Union Carbide,
- 0,56: Gew.-Teilen eines Katalysators I gemäß Beispiel 1,
- 0,99: Gew.-Teilen eines Katalysators II gemäß Beispiel 1 und
- 33,12: Gew.-Teilen R 141b,
wurde mit 174 Gew.-Teilen der B-Komponente (Diphenylmethandiisocyanat/Polyisocyanat) umgesetzt.

Es entstand ein PIR-Schaum mit folgenden Kennwerten:

| | |
|---|---|
| Rohdichte [kg/m³] | 32,4 |
| Dimensionsstabilität -5°C, 24 h [%] | 91,6 |
| Druckfestigkeit [kPa] | 338 |
| Wärmeleitfähigkeit [mW/m·K] | 19,6 |
| Flammhöhe [cm] | 9 |

## Patentansprüche

1. Verfahren zur Herstellung von Polyisocyanuratschaumstoffen mit verminderter Wärmeleitfähigkeit durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Katalysatoren,
e) gegebenenfalls Treibmitteln
f) sowie gegebenenfalls weiteren Hilfsmitteln und/oder Zusatzstoffen,
**dadurch gekennzeichnet, daß** als Komponente b) mindestens ein Recyclatpolyol, welches durch Glykolyse von Polyisocyanuratschaumstoffen unter Verwendung von Trägerpolyolen mit einer OH-Zahl von höchstens 500 mg KOH/g und einer Molmasse von mindestens 450 g/mol entsteht, eingesetzt wird.

2. Verfahren nach Anspruch 1, **dadurch gekennzeichnet, daß** das Recyclatpolyol in einem Anteil von mindestens 15 Gew.-%, bezogen auf die Gesamtmenge der Komponente b), eingesetzt wird.

3. Verfahren nach Anspruch 1 oder 2, **dadurch gekennzeichnet, daß** bei der Herstellung der Recyclatpolyole Trägerpolyole auf Basis von Glycerin und/oder Trimethylolpropan verwendet werden.

4. Verfahren nach einem der Ansprüche 1 bis 3, **dadurch gekennzeichnet, daß** das eingesetzte Recyclatpolyol aminarm ist.

5. Polyisocyanuratschaumstoffe mit verminderter Wärmeleitfähigkeit, erhältlich durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Katalysatoren,
e) gegebenenfalls Treibmitteln
f) sowie gegebenenfalls weiteren Hilfsmitteln und/oder Zusatzstoffen,
**dadurch gekennzeichnet, daß** als Komponente b) mindestens ein Recyclatpolyol, welches durch Glykolyse von Polyisocyanuratschaumstoffen unter Verwendung von Trägerpolyolen mit einer OH-Zahl von höchstens 500 mg KOH/g und einer Molmasse von mindestens 450 g/mol entsteht, eingesetzt wird.

6. Polyisocyanuratschaumstoffe nach Anspruch 5 **dadurch gekennzeichnet, daß** das Recyclatpolyol in einem Anteil von mindestens 15 Gew.-%, bezogen auf die Gesamtmenge der Komponente b), eingesetzt wird.

7. Polyisocyanuratschaumstoffe nach einem der Ansprüche 5 oder 6, **dadurch gekennzeichnet, daß** die Schaumstoffe eine Wärmeleitfähigkeit von höchstens 22 mW/(m . K) bei einer Rohdichte von 25 bis 50 kg/m³ aufweisen.

8. Verwendung der Polyisocyanuratschaumstoffe gemäß einem der Ansprüche 5 bis 7 zur Wärmedämmung.

## Claims

1. A process for producing polyisocyanurate foams having a reduced thermal conductivity by reacting
a) organic and/or modified organic polyisocyanates with
b) at least one relatively high molecular weight compound containing at least two reactive hydrogen atoms and, if desired,
c) low molecular weight chain extenders and/or crosslinkers
in the presence of
d) catalysts,
e) if desired, blowing agents
f) and, if desired, further auxiliaries and/or additives,
wherein the component b) used comprises at least one recycled polyol which is obtained by glycolysis of polyisocyanurate foams using carrier polyols having an OH number of at most 500 mg KOH/g and a molar mass of at least 450 g/mol.

2. A process as claimed in claim 1, wherein the recycled polyol is used in a proportion of at least 15% by weight, based on the total amount of the component b).

3. A process as claimed in claim 1 or 2, wherein carrier polyols based on glycerol and/or trimethylolpropane are used in the preparation of the recycled polyols.

4. A process as claimed in any of claims 1 to 3, wherein the recycled polyol used is low in amines.

5. A polyisocyanurate foam having a reduced thermal conductivity and obtainable by reacting
a) organic and/or modified organic polyisocyanates with
b) at least one relatively high molecular weight compound containing at least two reactive hydrogen atoms and, if desired
c) low molecular weight chain extenders and/or crosslinkers
in the presence of
d) catalysts,
e) if desired, blowing agents
f) and, if desired, further auxiliaries and/or additives,
wherein the component b) used comprises at least one recycled polyol which is obtained by glycolysis of polyisocyanurate foams using carrier polyols having an OH number of at most 500 mg KOH/g and a molar mass of at least 450 g/mol.

6. A polyisocyanurate foam as claimed in claim 5, wherein the recycled polyol is used in a proportion of at least 15% by weight, based on the total amount of the component b).

7. A polyisocyanurate foam as claimed in claim 5 or 6 which has a thermal conductivity of at most 22 mW/(m . K) at a foam density of from 25 to 50 kg/m³.

8. The use of a polyisocyanurate foam as claimed in any of claims 5 to 7 for thermal insulation.

## Revendications

1. Procédé pour la fabrication de mousses de polyisocyanurate présentant une conductibilité thermique réduite par transformation
a) de polyisocyanates organiques et/ou organiques modifiés avec
b) au moins un composé de haut poids moléculaire présentant au moins deux atomes d'hydrogène réactifs et, le cas échéant,
c) des agents d'allongement de chaîne et/ou de réticulation de bas poids moléculaire
en présence
d) de catalyseurs
e) le cas échéant d'agents moussants
f) ainsi que le cas échéant d'autres adjuvants et/ou additifs,
**caractérisé en ce qu'**on utilise comme composant b) au moins un polyol recyclé, qui est formé par glycolyse de mousses de polyisocyanurate en utilisant des polyols supportés présentant un indice OH d'au maximum 500 mg de KOH/g et une masse molaire d'au moins 450 g/mole.

2. Procédé selon la revendication 1, **caractérisé en ce que** le polyol recyclé est utilisé en une proportion d'au moins 15% en poids, par rapport à la quantité totale du composant b).

3. Procédé selon la revendication 1 ou 2, **caractérisé en ce qu'**on utilise des polyols supportés à base de glycérol et/ou de triméthylolpropane lors de la préparation des polyols recyclés.

4. Procédé selon l'une quelconque des revendications 1 à 3, **caractérisé en ce que** le polyol recyclé est pauvre en amines.

5. Mousses de polyisocyanurate présentant une conductibilité thermique réduite, pouvant être obtenues par transformation
a) de polyisocyanates organiques et/ou organiques modifiés avec
b) au moins un composé de haut poids moléculaire présentant au moins deux atomes d'hydrogène réactifs et, le cas échéant,
c) des agents d'allongement de chaîne et/ou de réticulation de bas poids moléculaire
en présence
d) de catalyseurs
e) le cas échéant d'agents moussants
f) ainsi que le cas échéant d'autres adjuvants et/ou additifs,
**caractérisées en ce qu'**on utilise comme composant b) au moins un polyol recyclé, qui est formé par glycolyse de mousses de polyisocyanurate en utilisant des polyols supportés présentant un indice OH d'au maximum 500 mg de KOH/g et une masse molaire d'au moins 450 g/mole.

6. Mousses de polyisocyanurate selon la revendication 5, **caractérisées en ce que** le polyol recyclé est utilisé en une proportion d'au moins 15% en poids, par rapport à la quantité totale du composant b).

7. Mousses de polyisocyanurate selon l'une quelconque des revendications 5 ou 6, **caractérisées en ce que** les mousses présentent une conductibilité thermique d'au maximum 22 mW/(m.K) à une densité brute de 25 à 50 kg/m³.

8. Utilisation des mousses de polyisocyanurate selon l'une quelconque des revendications 5 à 7 pour l'isolation thermique.
